# EUROPÄISCHE PATENTSCHRIFT

(11) **EP 2 496 458 B1**
(45) Veröffentlichungstag und Bekanntmachung des Hinweises auf die Patenterteilung: **23.11.2016**
(21) Anmeldenummer: 10766266.0
(22) Anmeldetag: 11.10.2010
(51) Int. Cl.: B60W 30/18

(54) **VERFAHREN ZUR STEUERUNG EINER ROLL- ODER SEGELFUNKTION EINES FAHRZEUGS**
METHOD FOR CONTROLLING A ROLLING OR COASTING FUNCTION OF A VEHICLE
PROCÉDÉ DE COMMANDE DE LA FONCTION DE ROULEMENT AU POINT MORT OU DE ROULEMENT MOTEUR COUPÉ D'UN VÉHICULE

(30) Priorität: 03.11.2009 DE 102009046340
(43) Veröffentlichungstag der Anmeldung: 12.09.2012
(73) Patentinhaber: ZF Friedrichshafen AG, 88046 Friedrichshafen (DE)
(72) Erfinder: WÜRTHNER, Maik, 88677 Markdorf (DE); STAUDINGER, Joachim, 88214 Ravensburg (DE)
(86) Internationale Anmeldenummer: PCT/EP2010/065153
(87) Internationale Veröffentlichungsnummer: WO 2011/054621

(56) Entgegenhaltungen:
- WO-A1-2005/084995
- WO-A1-2008/130288
- DE-A1- 10 151 933
- DE-A1- 10 221 701
- DE-A1- 19 700 325

## Beschreibung

Die Erfindung betrifft ein Verfahren zur Steuerung einer Roll- oder Segelfunktion eines Fahrzeugs gemäß dem Oberbegriff des Patentanspruchs 1.

Die Einsparung von Energie und Kosten beim Antrieb sowie die Verringerung der Umweltbelastung durch Abgasemissionen und Lärm sind aktuelle Ziele in der Fahrzeugentwicklung. Dazu können Fahrzeuge in geeigneten Fahrsituationen in einem Roll- oder Segelmodus temporär antriebslos fortbewegt werden. Bei einem Kraftfahrzeug im Rollmodus kann der Verbrennungsmotor möglichst verbrauchsreduziert und emissionsarm im Leerlauf drehen, während das Fahrzeug mit offenem Antriebsstrang rollt. Wird der Verbrennungsmotor in einer solchen Fahrsituation ausgeschaltet, um den Einspareffekt noch zu erhöhen, bewegt sich das Fahrzeug in einem so genannten Segelmodus. Diese Funktionen sind bereits bekannt.

Die Kraftschlussunterbrechung kann, je nach vorhandenen Antriebsstrangkomponenten und Getriebebauart, durch eine Schaltung des Getriebes in Neutral und/oder durch Öffnen einer Anfahr- oder Überbrückungskupplung erfolgen, sobald ein Rollen oder Segeln möglich ist. Durch Schließen des Antriebsstranges bzw. Gangwiedereinlegen wird der Roll- oder Segelmodus beendet.

Als problematisch hat sich herausgestellt, geeignete Fahrsituationen für die Aktivierung der Roll- oder Segelfunktion zu erkennen, gleichzeitig unnötige Kraftschlussunterbrechungen zu vermeiden und die Funktion zum richtigen Zeitpunkt wieder zu beenden. Wird die Funktion zu früh beendet, dann kann dadurch ein vorhandenes Schwungpotenzial weitgehend ungenutzt bleiben und der Spareffekt verloren gehen. Andererseits kann ein zu spätes Beenden der Funktion bei einem anschließenden Anstieg der Topographie, insbesondere bei schweren Nutzfahrzeugen, zu einem Defizit an Zugkraft und einer Fahrverzögerung mit Rückschaltungen bis zu einem erneuten Anfahrvorgang hin führen. Zudem sind der Fahrkomfort, der Verschleiß betroffener Komponenten des Antriebsstranges und die Fahrsicherheit zu berücksichtigen.

Bekannte Verfahren zur Steuerung der Roll- oder Segelfunktion erkennen jedoch oft Situationen zur Kraftschlussunterbrechung und Aufhebung der Kraftschlussunterbrechung aufgrund einer eher ungefilterten oder unzureichenden Berücksichtigung von topografischen Gegebenheiten der Fahrstrecke und/oder unzureichender Berücksichtigung des aktuellen Fahrzustandes des Fahrzeuges nicht korrekt, oder sie sind sehr komplex, was zu Fehlinterpretationen mit eher für den Fahrer situationsbedingt unerwünschten und gegebenenfalls kontraproduktiven Ein- und Ausschaltvorgängen der Roll- oder Segelfunktion oder auch zu einer eher ineffektiven Nutzung von geeigneten Roll- oder Segelsituationen führen kann.

Weiterhin ist es bekannt, aus Komfort- und Verkehrs- bzw. Fahrsicherheitsgründen moderne Fahrzeuge zunehmend mit automatischen Fahrgeschwindigkeitsregelungsfunktionen oder Fahrgeschwindigkeits- und Abstandsregelungsfunktionen auszustatten. Solche Systeme sind beispielsweise als so genannte Tempomat-Bremsomat-Systeme bekannt und für Personenkraftfahrzeuge und Nutzfahrzeuge verfügbar. Sie ermöglichen es, eine vom Fahrer vorgegebene Wunschgeschwindigkeit einhalten oder in dessen Erweiterung als ACC (Adaptive Cruise Control) oder ADR (Automatic Distance Regulation), die mit Hilfe von Sensoren, beispielsweise Radar, Infrarot, Video oder Ultraschall, einen Überwachungsbereich vor dem Fahrzeug oder um das Fahrzeug herum aufbauen, wodurch zusätzlich zumindest der Abstand zum vorausfahrenden Fahrzeug durch automatisches Gaswegnehmen oder Abbremsen mittels eines Bremsomats angepasst wird.

Insbesondere reagieren bekannte Tempomat-Bremsomat-Systeme in Nutzkraftwagen bei einem Verzögerungsbedarf im Gefälle und/oder zur Abstandsanpassung zum vorausfahrenden Fahrzeug mit einer Bremsung mittels einer vorhandenen Dauerbremsanlage, wie einem antriebs- oder abtriebsseitigen hydrodynamischen oder elektrodynamischen Retarder und/oder der Betriebsbremsen, wobei vorzugsweise der Retarder genutzt wird. Bei einem Beschleunigungsbedarf zur Aufrechterhaltung bzw. Erreichung einer vorgegebenen Tempomatgeschwindigkeit fordern diese Systeme ein Motordrehmoment an.

Aus der DE 102 21 701 A1 ist ein Verfahren zur Steuerung einer Roll- oder Segelfunktion für ein Kraftfahrzeug mit einem automatisierten Getriebe bekannt. Bei dem bekannten Verfahren werden eine die Fahrzeuggeschwindigkeit repräsentierende Größe, eine Bremsbetätigung und/oder eine Betätigung eines Kraftstoffzufuhrbemessungsglieds sowie ein Betriebszustand des Verbrennungsmotors detektiert. Eine Kupplungsvorrichtung wird geöffnet und damit der Kraftschluss im Antriebsstrang unterbrochen, wenn bei laufendem Verbrennungsmotor und Überschreiten einer bestimmten Fahrzeuggeschwindigkeit weder das Fahrpedal bzw. Kraftstoffzufuhrbemessungsglied noch das Bremspedal betätigt werden. Nach dem Öffnen der Kupplung wird das Getriebe in Neutral geschaltet, so dass sich das Fahrzeug in einem Rollmodus befindet.

Durch Betätigen des Fahrpedals oder des Bremspedals oder durch Verändern von in ihrer Wirkung entsprechender Größen, wird die Kupplung wieder geschlossen und dadurch der Rollmodus beendet. Vor dem Schließen der Kupplung erfolgt jedoch zunächst eine Synchronisation der Drehzahlen des Verbrennungsmotors und einer Getriebeeingangswelle, um möglichst ruckfrei vom Rollmodus in den regulären Antrieb zurückzukehren. Das Öffnen der Kupplung und damit der Rollmodus werden verhindert, wenn ein voraussichtlicher Bremsbedarf angenommen wird. Dies kann beispielsweise bei einer Bergabfahrt, bei einem plötzlichen Gaswegnehmen oder bei der Anwahl eines sportbetonten Fahrprogramms der Fall sein.

Aus der DE 10 2007 001 936 A1 ist ein Verfahren zur Steuerung einer Schaltkupplung eines Automatgetriebes eines Kraftfahrzeuges bekannt, bei dem kontinuierlich eine Bergdetektion und eine Neutralleerlaufsteuerung ausgewertet und geprüft werden. Das Verfahren wird durchgeführt, um in Leerlaufzuständen des Verbrennungsmotors, beispielsweise beim Halten an Signalanlagen oder im Stopp-and-Go-Betrieb, in einer Neutralstellung des Getriebes Kraftstoff zu sparen. Gleichzeitig soll aber auch bei einer Neutralschaltung des Getriebes ein Rückrollen des Fahrzeugs an einer Steigung aufgrund eines zu geringen Bremsdrucks zum Halten des Fahrzeuges verhindert werden.

Für eine solche Neutralleerlaufsteuerung, d.h. eine situationsgeregelte Neutralschaltung, müssen bestimmte Eintrittsbedingungen erfüllt sein, zu denen eine Auswertung eines Bergdetektionsflags und eines Bergzählers gehören. Ein Bergdetektionsflag kann bei einer entsprechenden Bewertung anhand der Bergdetektion gesetzt bzw. ein Bergzähler erhöht werden. Dies ist der Fall, wenn sich das Getriebe in einem Vorwärtsgang befindet, eine Getriebeabtriebsdrehzahl größer als ein vorgegebener Abtriebsdrehzahlgrenzwert ist, eine Drosselstellung des Verbrennungsmotors kleiner als ein vorgegebener Drosselstellungsgrenzwert ist, ein Bremsstatus anzeigt, dass die Fahrzeugbremse betätigt ist, und die Getriebetemperatur innerhalb eines zulässigen Bereichs ist.

Eine rückrollfreie Neutralleerlaufschaltung kann erfolgen, wenn bei einer Getriebeabtriebsdrehzahl, die kleiner als der vorgegebene Abtriebsdrehzahlgrenzwert ist, der aktuelle Zählerstand kleiner als ein vorgegebener Zählergrenzwert ist, oder bei einem Zählerstand oberhalb dieses Zählergrenzwertes, wenn der Bremsdruck größer als ein vorberechneter Bremsdruckgrenzwert ist, oder, falls der Bremsdruck nicht zur Verfügung steht und der Zählerstand größer als der Zählergrenzwert ist, wenn ein Bergdetektionsflag gesetzt ist.

Aus der DE 10 2004 017 115 A1 ist ein Verfahren zur automatischen Fahrgeschwindigkeitsregelung oder Fahrgeschwindigkeits- und Abstandsregelung für ein Fahrzeug mit einem automatischen oder automatisierten Getriebe bekannt, bei dem die Fahrzeuggeschwindigkeit im Bereich einer vorgewählten Sollgeschwindigkeit variieren kann. Dabei folgt jeweils auf eine Beschleunigungsphase eine Ausrollphase, in welcher der Kraftschluss im Antriebsstrang unterbrochen werden kann, um Kraftstoff zu sparen. Bei der Abfolge der Beschleunigungs- und Ausrollphasen können mittels einer Navigationseinrichtung gewonnene topografische Daten, Daten aus einer Überwachungseinrichtung des unmittelbaren Fahrzeugumfeldes und/oder bestimmte Fahrzeugparameter berücksichtigt werden. Die Beschleunigungsphasen können über einen zusätzlich zu einem Verbrennungsmotor vorhandenen Elektromotor unterstützt werden.

Aus der WO 2003/037672 ist ein Stufenschaltgetriebe, insbesondere für schwere Nutzfahrzeuge bekannt, welches beim Erkennen eines verbrauchsarmen Fahrzustandes in Neutral, also in einen Rollmodus geschaltet wird. Ein verbrauchsarmer Fahrzustand wird dann erkannt bzw. die Neutralstellung wird dann geschaltet, wenn eine Sollgeschwindigkeit vorgegeben ist und die Fahrzeuggeschwindigkeit sich ohne Rollmodus verringern würde. Dies wird insbesondere dann angenommen, wenn weder Gas- noch Bremspedal gedrückt sind oder äquivalente Größen sich ändern. Aus Sicherheitsgründen steht eine Zusatzbremseinrichtung zur Verfügung, die während des Rollbetriebes angefordert werden kann. Zudem wird der aktuell eingelegte Gang berücksichtigt.

Außerdem ist aus der WO 2009/037167 A1 ein Verfahren zur Steuerung eines automatisierten oder automatischen Stufengetriebes eines Kraftfahrzeuges, insbesondere eines schweren Nutzfahrzeuges bekannt, bei dem zur Verringerung des Kraftstoffverbrauchs, bei einer Fahrt im Gefälle beim anschließenden Übergang in einen Gefälleauslauf, anstelle wie üblich erst nach der Einfahrt in die Ebene bzw. nach dem Übergang vom Schubbetrieb in den Zugbetrieb hochzuschalten, schon vor der Einfahrt in die Ebene bzw. vor dem Beginn des Zugbetriebs in einen höheren Gang geschaltet wird, also eine Schubhochschaltung durchgeführt wird.

Dazu wird in einem festgelegten Zeittakt die aktuelle Fahrbahnsteigung ermittelt und bei der Gefällefahrt eine Funktion zur Erkennung des Gefälleauslaufs aktiviert, um möglichst vorzeitig automatisch hochzuschalten. Dadurch wird die Drehzahl des Antriebsmotors und gegebenenfalls einer aktiven Dauerbremseinrichtung abgesenkt, was aufgrund des geringeren Motorschleppmomentes und gegebenenfalls geringeren Retarder-Bremsmomentes zu einer Beschleunigung des Fahrzeuges führen kann, wodurch der Zugbetrieb vergleichsweise später einsetzt. Der höhere Gang wird dabei so gewählt, dass nur eine leichte Beschleunigung des Fahrzeuges erfolgt, damit der Fahrer die Situation jederzeit sicher kontrollieren kann.

Ein Gefälleauslauf wird daran erkannt, dass sich das unmittelbar zuvor durchfahrene Gefälle während einer bestimmten Anzahl von Zeittakten monoton verringert und einen Grenzwert unterschreitet. Zudem können verschiedenen Kriterien, beispielsweise ein Betätigen der Betriebsbremse, eine zu hohe Fahrzeugbeschleunigung, ein zu steiles Gefälle, eine besonders schwere Ladung, ein Betreiben einer Dauerbremse an ihrer Belastungsgrenze oder eine Überschreitung einer Sollgeschwindigkeit oder Unterschreitung eines Sicherheitsabstandes, was durch einen aktiven Tempomat/Bremsomat geregelt wird, vorgesehen sein, die aus Sicherheitsgründen zu einer Sperrung der Schubhochschaltung führen.

Aus dem Dokument WO2008/130288 A1 ist ein Verfahren gemäß dem Oberbegriff des Anspruchs 1 bekannt.

Die bekannten Verfahren zeigen verschiede Möglichkeiten zur Minderung des Kraftstoffverbrauchs mit Hilfe von Schwungnutzfahrten auf.

Vor diesem Hintergrund liegt der Erfindung die Aufgabe zugrunde, ein Verfahren zur Steuerung einer Roll- oder Segelfunktion eines Fahrzeugs mit einem automatischen oder automatisierten Getriebe und einer Geschwindigkeitsregeleinrichtung anzugeben, mit dem eine Roll- oder Segelsituation möglichst effizient genutzt und dennoch sicher sowie komfortabel beendet werden kann.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass bei einer Fahrt mit einem Fahrzeug mit einer Roll- oder Segelfunktion und einer Fahrgeschwindigkeitsregeleinrichtung bzw. einem Tempomat/Bremsomat-System bei einem Übergang von einer Gefällstrecke in eine Ebene oder eine Steigung nach einer Roll- oder Segelsituation die Kraftschlusswiederherstellung im Antriebsstrang sich an einer gewählten Geschwindigkeit des Tempomaten orientieren soll, aber unter Berücksichtigung aktueller Parameter des Fahrzeuges und/oder der Topografie der befahrenen Strecke abweichend davon, mit Hilfe einer Getriebesteuerung, flexibel gehandhabt werden kann.

Demnach geht die Erfindung aus von einem Verfahren zur Steuerung einer Roll- oder Segelfunktion eines Fahrzeugs, beispielsweise eines Nutzkraftwagens, mit einem Antriebsstrang mit einem Antriebsmotor, einem über eine Getriebesteuerung ansteuerbaren automatischen oder automatisierten Getriebe, mit ansteuerbaren Schaltmitteln zur Unterbrechung des Kraftschlusses im Antriebsstrang und mit einer Fahrgeschwindigkeitsregeleinrichtung, bei dem in einer geeigneten Fahrsituation der Kraftschluss im Antriebsstrang unterbrochen wird. Zur Lösung der gestellten Aufgabe sieht die Erfindung vor, dass der Kraftschluss im Antriebsstrang abhängig von einer wählbaren Geschwindigkeitsdifferenz zwischen der aktuellen Fahrzeuggeschwindigkeit und einer mittels der Fahrgeschwindigkeitsregeleinrichtung festgesetzten unteren Grenzgeschwindigkeit wiederhergestellt wird.

Unter einer Rollfunktion bzw. einem Rollmodus wird das Fahren eines Fahrzeuges mit offenem Antriebstrang, d.h. eine antriebslose Vorwärtsfahrt oder Schwungnutzfahrt, bei laufendem Antriebsmotor verstanden. Unter einer Segelfunktion bzw. einem Segelmodus wird das Fahren eines Fahrzeuges mit offenem Antriebstrang bei abgeschaltetem Antriebsmotor verstanden.

Unter einer Fahrgeschwindigkeitsregeleinrichtung wird ein Fahrzeugsystem verstanden, das sowohl einen so genannten Tempomat als auch einen so genannten Bremsomat für Antriebs- bzw. Bremseingriffe aufweist. Ein solches System wird dementsprechend auch als ein Tempomat/Bremsomat-System bezeichnet. Das System kann auch eine Abstandsregeleinrichtung aufweisen.

Entsprechend der üblichen Vorzeichenkonvention werden Gefälle als negative Steigungen, Verzögerungen als negative Beschleunigungen und resultierende antreibende Hangabtriebskräfte als negative Fahrwiderstände verstanden.

Da einerseits die Tempomat/Bremsomat-Funktion geschwindigkeits- und/oder sicherheitsrelevante Eingriffe am Antrieb vornimmt, andererseits die Roll- oder Segelfunktion verbrauchsrelevante Neutralschaltungen bzw. Kraftschlussunterbrechungen des Antriebsstranges veranlasst, hat es sich als vorteilhaft herausgestellt, beide Funktionen, soweit vorhanden, bedarfsweise zu koordinieren, um einen effektiven und komfortablen Fahrbetrieb zu erreichen, jedoch ohne deren eigenständige Funktionsweisen aufzugeben. Dies ist vor allem deshalb sinnvoll, weil der Tempomat/Bremsomat eher nur auf einen Fahrerwunsch und/oder unter bestimmten Randbedingungen eingeschaltet ist, während die kraftstoffsparende Neutralschaltung bzw. Kupplungsöffnung eher situationsbezogen automatisch aktiviert oder deaktiviert werden kann. Ist ein Tempomat/Bremsomat-System vorhanden und aktiv, so kann die Steuerung der Koordination von Tempomat/Bremsomat-Funktion sowie der Roll- oder Segelfunktion vorteilhaft von einer vorhandenen, entsprechend angepassten Getriebesteuerung aus erfolgen.

Die Roll- oder Segelsituationen können über ein Getriebesteuergerät, welches relevante Signale erfasst sowie Daten auswertet und in der Folge Befehle zur Einleitung, Durchführung, Blockierung und Beendigung der Roll- oder Segelfunktion ausgibt, gesteuert werden. Grundsätzlich ist dazu bei Fahrzeugen mit Tempomat- bzw. Bremsomat-Einrichtungen keine Softwareänderung an den Reglern für diese Systeme erforderlich, was sich kostengünstig auswi rkt.

Die Segel- oder Rollfunktion kann grundsätzlich dann aktiviert werden, wenn die aktuelle Fahrbahnsteigung eine antriebslose Vorwärtsfahrt bzw. eine Schwungnutzfahrt ermöglicht. In einer für das erfindungsgemäße Verfahren relevanten Situation befindet sich das Fahrzeug zunächst in einer Gefällstrecke mit einem anschließenden Übergang in eine Ebene bzw. einen Anstieg, und wird während dieser Fahrsituation in einen Roll-Segelmodus versetzt. Die situationsrichtige Aktivierung der Roll- oder Segelfunktion im Gefälleauslauf wird in einer anderen Patentanmeldung der Anmelderin behandelt.

Das antriebslos rollende Fahrzeug verliert anschließend durch den Fahrwiderstand, der sich aus dem Luftwiderstand, dem Rollwiderstand sowie dem Steigungswiderstand und dem Beschleunigungswiderstand ergibt, an Geschwindigkeit, wenn die Streckentopografie in die Ebene übergeht oder wieder ansteigt. Zum Schließen des Antriebsstrangs wird erfindungsgemäß in dem zuvor in Neutral geschalteten Getriebe der ursprünglich ausgelegte Gang oder ein anderer geeigneter Gang in Abhängigkeit von einer gesetzten Tempomatgeschwindigkeit bzw. unteren Grenzgeschwindigkeit der Geschwindigkeitsregeleinrichtung und der aktuellen Fahrzeuggeschwindigkeit eingelegt und/oder eine zuvor zur Trennung des Antriebsmotors vom Antriebsstrang geöffnete Kupplung wieder geschlossen.

Durch das erfindungsgemäße Verfahren wird vorteilhaft erreicht, dass der Antriebsstrang zu einem für eine komfortable Weiterfahrt zweckmäßigen, gleichzeitig aber auch unter Verbrauchsgesichtspunkten günstigen Zeitpunkt wieder geschlossen werden kann, so dass dann ein Antriebsdrehmoment von dem Antriebsmotor über das Getriebe auf die Fahrzeugräder übertragen werden kann.

Erfindungsgemäß ist vorgesehen, dass die Geschwindigkeitsdifferenz zwischen der aktuellen Fahrgeschwindigkeit und der Tempomatgeschwindigkeit, bei der die Kraftschlusswiederherstellung erfolgt, abhängig von der aktuellen Fahrzeugbeschleunigung gewählt wird. Die Zuordnung der Fahrzeugbeschleunigung und der Geschwindigkeitsdifferenz ist dabei vorteilhaft frei wählbar. Die Kraftschlusswiederherstellung kann somit bei einer Fahrzeuggeschwindigkeit oberhalb oder unterhalb der Tempomatgeschwindigkeit erfolgen.

Dementsprechend kann eine Motormomentanforderung des Tempomats temporär durch die Getriebesteuerung blockiert werden, um einen relativ großen Geschwindigkeitsverlust des Fahrzeuges zuzulassen. Dies ist insbesondere dann vorteilhaft, wenn sich das Fahrzeug mit einer vergleichsweise geringen Verzögerung (negativen Beschleunigung) bewegt, wodurch ein sanftes Ausrollen in einer Ebene erkannt wird, welches eine besonders geeignete Fahrsituation für die Roll- oder Segelfunktion ist. Folglich wird der Gang entsprechend später, unterhalb der Tempomatgeschwindigkeit, eingelegt bzw. die Anfahrkupplung geschlossen.

Beispielsweise kann bei einer negativen Fahrzeugbeschleunigung unterhalb eines Schwellwertes, also bei einer relativ langsamen Fahrzeugverzögerung, die Geschwindigkeitsdifferenz, bei der die Kraftschlusswiederherstellung erfolgt, dem Betrag nach einer Größenordnung einer Geschwindigkeitsdifferenz zwischen einer mittels der Fahrgeschwindigkeitsregeleinrichtung festgesetzten oberen Grenzgeschwindigkeit, also einer Bremsomat-Geschwindigkeit, und der unteren Grenzgeschwindigkeit, also der Tempomatgeschwindigkeit entsprechen. Damit kann eine Roll- oder Segelsituation quasi vollständig ausgeschöpft werden, um einen hohe Kraftstoffeinsparung zu erreichen.

Andererseits kann auch eine sehr geringe Geschwindigkeitsdifferenz als Schwelle zum Beenden des Roll- oder Segelmodus gewählt werden, so dass der Kraftschluss bei einer Fahrzeuggeschwindigkeit nahe der Tempomatgeschwindigkeit erfolgt.

Die Geschwindigkeitsdifferenz kann negativ sein, d.h., dass der Gang zu einem Zeitpunkt wieder eingelegt wird bzw. die Kupplung geschlossen wird, bei dem die Fahrgeschwindigkeit bereits etwas unter die Tempomatgeschwindigkeit abgesunken ist, oder umgekehrt positiv sein, so dass der Gang bereits etwas oberhalb der Tempomatgeschwindigkeit wieder eingelegt bzw. die Kupplung wieder geschlossen wird.

Insbesondere kann vorgesehen sein, dass bei einer negativen Fahrzeugbeschleunigung oberhalb eines Schwellwertes die Geschwindigkeitsdifferenz zwischen Fahrgeschwindigkeit und Tempomatgeschwindigkeit, bei der die Kraftschlusswiederherstellung erfolgt, einen Wert nahe Null einnimmt. So kann beispielsweise bei einer starken Verzögerung (negativen Beschleunigung) des Fahrzeuges, bei der kein sanftes Ausrollen des Fahrzeuges sondern eher ein abruptes Ende der Gefällstrecke mit einem kurzfristigen Drehmomentbedarf erwartet wird, frühzeitig der Kraftschluss wiederhergestellt werden, um erforderlichenfalls eine unmittelbar abrufbare Zugkraft für eine anschließende Steigung zur Verfügung zu stellen. Selbstverständlich kann als Spezialfall der Antriebsstrang auch zu dem Zeitpunkt geschlossen werden, an dem die aktuelle Fahrgeschwindigkeit mit der Tempomatgeschwindigkeit übereinstimmt.

Außerdem kann auch durch eine Auswertung der aktuellen Fahrbahnsteigung, welche durch eine Sensorik und gegebenenfalls durch eine geeignete Berechnung ermittelbar ist, und/oder des Fahrwiderstandes, welcher sich aus dem Luftwiderstand, dem Rollwiderstand, dem (negativen) Steigungswiderstand sowie dem (negativen) Beschleunigungswiderstand ergibt, in vergleichbarer Weise auf einen topografischen Streckenverlauf geschlossen werden, der einen eher geringen oder eher großen Geschwindigkeitsverlust bis zum Schließen des Antriebsstranges sinnvoll erscheinen lässt.

Der Zeitpunkt zum Schließen des Antriebstrangs wird demzufolge über eine aktuelle Geschwindigkeitsdifferenz zwischen der Fahrzeuggeschwindigkeit und der Tempomatgeschwindigkeit bestimmt, bei der eine Differenzgeschwindigkeitsschwelle frei wählbar ist. Um einen günstigen Zeitpunkt zu ermitteln, werden die Fahrzeugbeschleunigung und/oder die Fahrbahnsteigung und/oder der Fahrwiderstand sowie gegebenenfalls weitere Parameter ausgewertet, und in Abhängigkeit von diesen Werten wird dann die Differenzgeschwindigkeitsschwelle ermittelt, bei der die Roll- oder Segelfunktion deaktiviert wird.

Das Verfahren bietet somit die Möglichkeit, nach einem Rollen oder so genannten Segeln des Fahrzeugs mit offenem Antriebsstrang, situationsbezogen variabel den Antriebsstrang wieder zu schließen bzw. den Gang wieder einzulegen, wobei die Tempomatgeschwindigkeit als Orientierungsgeschwindigkeit verwendet und je nach Situation und/oder anderer vorgegebener Parameter nach oben oder unten, weniger oder mehr davon abgewichen wird. Damit kann einerseits die Roll- oder Segelfunktion effektiv genutzt werden um Kraftstoff zu sparen, andererseits werden der Fahrkomfort und der Fahrerwunsch nach einem bestimmten Vortrieb zumindest weitgehend berücksichtigt.

Zur Verdeutlichung der Erfindung ist der Beschreibung eine Zeichnung eines Ausführungsbeispiels beigefügt. In dieser zeigt die einzige **Figur** eine schematische Darstellung zur situationsabhängigen Beendigung einer Roll- oder Segelfunktion bei einem Nutzkraftwagen.

Der Nutzkraftwagen besitzt einen Antriebsstrang mit einem Verbrennungsmotor und einem automatischen oder automatisierten Ein- oder Mehrgruppengetriebe, welches über eine Getriebesteuerung ansteuerbar ist. Weiterhin ist eine Fahrgeschwindigkeitsregeleinrichtung vorgesehen. Fahrzeuge mit solchen Antriebssträngen sind an sich bekannt, so dass sich die nachfolgende Beschreibung auf ein erfindungsgemäßes Verfahren zur Steuerung einer Roll- oder Segelfunktion eines solchen Fahrzeuges beschränkt.

Das Verfahren beruht im Wesentlichen darauf, dass der Kraftschluss im Antriebsstrang nach einer Roll- oder Segelsituation abhängig von einer wählbaren Geschwindigkeitsdifferenz Δv_F_T = v_F - v_T zwischen der aktuellen Fahrzeuggeschwindigkeit v_F und einer über die Fahrgeschwindigkeitsregeleinrichtung gesetzten unteren Grenzgeschwindigkeit, d.h. einer Tempomatgeschwindigkeit v_T, wiederhergestellt wird.

Demnach befindet sich der Nutzkraftwagen 1 in der einzigen Zeichnungsfigur in einer leichten Gefällstrecke 2 mit einer relativ geringen negativen Steigung α_Fb, die über einen Gefälleauslauf 3 in eine Eben 4 übergeht. Über die Getriebesteuerung wurde das Getriebe in Neutral geschaltet, so dass sich der Nutzkraftwagen 1 antriebslos in einem Rollmodus bewegt. Aufgrund des Fahrwiderstandes F_W, d.h. der Summe aus Luft- und Rollwiderstand sowie Steigungs- und Beschleunigungswiderstand, wirkt eine negative Fahrzeugbeschleunigung a_F, die zu einem zunehmenden Geschwindigkeitsverlust führt.

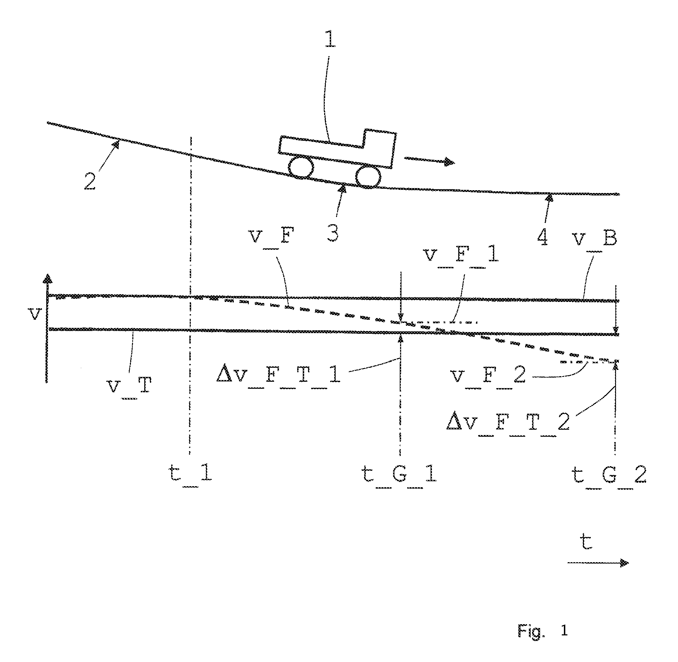

Die Fig. 1 zeigt eine obere Geschwindigkeitsgrenze v_B und eine untere Geschwindigkeitsgrenze v_T, welche als Bremsomat-Geschwindigkeit v_B bzw. als Tempomatgeschwindigkeit v_T durch die als ein Tempomat/Bremsomat-System ausgebildete Fahrgeschwindigkeitsregeleinrichtung vorab festgelegt worden sind. Grundsätzlich wird über das Tempomat/Bremsomat-System eine Bremseinrichtung des Fahrzeugs 1 angesteuert, wenn dieses über die Bremsomat-Geschwindigkeit v_B hinaus beschleunigt, um die Fahrgeschwindigkeit v_F nicht weiter ansteigen zu lassen bzw. konstant zu halten, und ein Motordrehmoment wird angefordert, wenn die Fahrzeuggeschwindigkeit v_F unter die Tempomatgeschwindigkeit v_T abfällt, um das Fahrzeug 1 mindestens bei dieser Fahrgeschwindigkeit v_F weiter zu betreiben. Weiterhin ist, als gestrichelte Kurve, ein zeitlicher Verlauf der Fahrzeuggeschwindigkeit v_F beim Durchfahren der topografischen Fahrsituation dargestellt. Zu einem angenommenen Zeitpunkt t_1 beginnt ein Geschwindigkeitsverlust, der beim Rollen in die Ebene 4 weiter zunimmt.

Zur Verdeutlichung der Erfindung sind beispielhaft zwei weitere Zeitpunkte t_G_1 und t_G_2 eingezeichnet, an denen ein Gang des Fahrzeuggetriebes wieder eingelegt werden könnte. Beim ersten Beispiel wird eine eher starke fahrwiderstandsbedingte Verzögerung (negative Beschleunigung a_F) des Fahrzeuges 1 angenommen und daher nur ein relativ geringer Geschwindigkeitsverlust gegenüber der Bremsomat-Geschwindigkeit v_B zugelassen. Demzufolge wird bei einer kleinen positiven Geschwindigkeitsdifferenz Δv_F_T_1 = v_F_1 - v_T zum Schaltzeitpunkt t_G_1 der Gang bereits vor einer Drehmomentanforderung des Tempomats wieder eingelegt. Dementsprechend steht frühzeitig eine Zugkraft zur Verfügung, die gegebenenfalls für eine kommende Steigung benötigt wird. Die Kraftstoffersparnis durch die Rollphase ist jedoch eher gering.

Beim zweiten Beispiel wird eine eher schwache Verzögerung (negative Beschleunigung a_F) angenommen. Daher wird ein relativ großer Geschwindigkeitsverlust, sogar unter die Tempomatgeschwindigkeit v_T, zugelassen. Demzufolge wird der Gang erst bei einer großen negativen Geschwindigkeitsdifferenz Δv_F_T_2 = v_F_2 - v_T zum Schaltzeitpunkt t_G_2 wieder eingelegt. Das Fahrzeug 1 rollt somit zum Zeitpunkt t_G_2, an dem der Gang unterhalb der Tempomatgeschwindigkeit v_T eingelegt wird, bereits eine gewisse Strecke in der Ebene 4. Daraus resultiert eine relativ hohe Kraftstoffersparnis. Durch die lang gezogene Ebene 4 wird erst vergleichsweise später Zugkraft für die Weiterfahrt benötigt.

Die beiden beschriebenen Szenarien sind lediglich beispielhaft zu verstehen. Der Fachmann kann aufgrund der frei wählbaren Differenzgeschwindigkeitsschwelle weitere bzw. andere günstige Entscheidungszeitpunkte zum Schließen des Antriebsstranges der Getriebesteuerung vorgeben.

### Bezugszeichenliste

- 1: Nutzkraftwagen
- 2: Gefällstrecke
- 3: Gefälleauslauf
- 4: Ebene
- a_F: Fahrzeugbeschleunigung
- α_Fb: Fahrbahnsteigung
- F_W: Fahrwiderstand
- t: Zeit
- t_1: Zeitpunkt
- t_G_1: Zeitpunkt
- t_G_2: Zeitpunkt
- v: Geschwindigkeit
- v_B: Bremsomat-Geschwindigkeit
- v_F: Fahrzeuggeschwindigkeit
- v_F_1: Fahrzeuggeschwindigkeit zum Zeitpunkt t_G_1
- v_F_2: Fahrzeuggeschwindigkeit zum Zeitpunkt t_G_2
- v_T: Tempomatgeschwindigkeit
- Δv_B_T: Geschwindigkeitsdifferenz
- Δv_F_T: Geschwindigkeitsdifferenz
- Δv_F_T_1: Geschwindigkeitsdifferenz zum Zeitpunkt t_G_1
- Δv_F_T_2: Geschwindigkeitsdifferenz zum Zeitpunkt t_G_2

## Patentansprüche

1. Verfahren zur Steuerung einer Roll- oder Segelfunktion eines Fahrzeugs, beispielsweise eines Nutzkraftwagens (1), mit einem Antriebsstrang mit einem Antriebsmotor, einem über eine Getriebesteuerung ansteuerbaren automatischen oder automatisierten Getriebe, mit ansteuerbaren Schaltmitteln zur Unterbrechung des Kraftschlusses im Antriebsstrang und mit einer Fahrgeschwindigkeitsregeleinrichtung, bei dem in einer geeigneten Fahrsituation der Kraftschluss im Antriebsstrang unterbrochen wird, wobei der Kraftschluss im Antriebsstrang abhängig von einer wählbaren Geschwindigkeitsdifferenz (Δv_F_T) zwischen der aktuellen Fahrzeuggeschwindigkeit (v_F) und einer mittels der Fahrgeschwindigkeitsregeleinrichtung festgesetzten unteren Grenzgeschwindigkeit (v_T) wiederhergestellt wird, **dadurch gekennzeichnet, dass** die Geschwindigkeitsdifferenz (Δv_F_T), bei der die Kraftschlusswiederherstellung erfolgt, abhängig von der aktuellen Fahrzeugbeschleunigung (a_F) derart gewählt wird, dass bei einer negativen Fahrzeugbeschleunigung (a_F) oberhalb eines Schwellwertes die Kraftschlusswiederherstellung bereits vor einer Drehmomentanforderung des Tempomats erfolgt bzw. dass bei einer negativen Fahrzeugbeschleunigung (a_F) unterhalb eines Schwellwertes eine Momentenanforderung des Tempomats durch die Getriebesteuerung temporär blockiert wird und die Kraftschlusswiederherstellung erst unterhalb der Tepomatgeschwindigkeit (v_T) erfolgt.

2. Verfahren nach Anspruch 1, **dadurch gekennzeichnet, dass** bei einer negativen Fahrzeugbeschleunigung (a_F) oberhalb des Schwellwertes die Geschwindigkeitsdifferenz (Δv_F_T), bei der die Kraftschlusswiederherstellung erfolgt, einen Wert nahe Null einnimmt.

3. Verfahren nach Anspruch 2, **dadurch gekennzeichnet, dass** bei einer negativen Fahrzeugbeschleunigung (a_F) unterhalb des Schwellwertes die Geschwindigkeitsdifferenz (Δv_F_T), bei der die Kraftschlusswiederherstellung erfolgt, dem Betrag nach, näherungsweise einer Geschwindigkeitsdifferenz (Δv_B_T) zwischen einer mittels der Fahrgeschwindigkeitsregeleinrichtung festgesetzten oberen Grenzgeschwindigkeit (v_B) und der unteren Grenzgeschwindigkeit (v_T) entspricht.

4. Verfahren nach einem der Ansprüche 1 bis 3, **dadurch gekennzeichnet, dass** die Geschwindigkeitsdifferenz (Δv_F_T), bei der die Kraftschlusswiederherstellung erfolgt, abhängig von der aktuellen Fahrbahnsteigung (α_Fb) gewählt wird.

5. Verfahren nach einem der Ansprüche 1 bis 4, **dadurch gekennzeichnet, dass** die Geschwindigkeitsdifferenz (Δv_F_T), bei der die Kraftschlusswiederherstellung erfolgt, abhängig von dem aktuellen Fahrwiderstand (F_W) gewählt wird.

6. Verfahren nach einem der Ansprüche 1 bis 5, **dadurch gekennzeichnet, dass** die Kraftschlusswiederherstellung bei einer Fahrzeuggeschwindigkeit (v_F) oberhalb der unteren Grenzgeschwindigkeit (v_T) erfolgt.

7. Verfahren nach einem der Ansprüche 1 bis 5, **dadurch gekennzeichnet, dass** die Kraftschlusswiederherstellung bei einer Fahrzeuggeschwindigkeit (v_F) unterhalb der unteren Grenzgeschwindigkeit (v_T) erfolgt.

8. Verfahren nach einem der Ansprüche 1 bis 7, **dadurch gekennzeichnet, dass** die Kraftschlusswiederherstellung über eine Getriebesteuerung durch das Einlegen eines Ganges nach einer vorangegangenen Neutralschaltung und/oder durch das Schließen einer Kupplungseinrichtung nach einer vorangegangenen Trennung des Antriebsmotors vom Antriebsstrang erfolgt.

9. Verfahren nach einem der Ansprüche 1 bis 8, **dadurch gekennzeichnet, dass** die der Kraftschlusswiederherstellung vorangegangene Neutralschaltung und/oder Trennung des Antriebsmotors vom Antriebsstrang aufgrund einer Fahrsituation erfolgt ist, in der eine Streckentopografie von einem Gefälle (2) in eine Ebene (4) oder ein Steigung übergeht.

## Claims

1. Method for controlling the rolling or coasting function of a vehicle, for example of a utility motor vehicle (1), having a drive train with a drive motor, an automatic or automated transmission which can be actuated by means of a transmission controller, having actuable shift means for interrupting the force flux in the drive train and having a cruise control device in which, in a suitable driving situation, the force flux in the drive train is interrupted, wherein the force flux in the drive train is restored as a function of a selectable speed difference (Δv_F_T) between the current vehicle speed (v_F) and a lower limiting speed (v_T) which is defined by means of a cruise control device, **characterized in that** the speed difference (Δv_F_T) at which the force flux is restored is selected as a function of the current vehicle acceleration (a_F) in such a way that in the case of a negative vehicle acceleration (a_F) over a threshold value the force flux is already restored before a torque request by the cruise controller, and **in that** in the case of a negative vehicle acceleration (a_F) below a threshold value a torque request of the cruise controller is temporarily blocked by the transmission controller and the force flux is only restored below the cruise control speed (v_T).

2. Method according to Claim 1, **characterized in that** in the case of a negative vehicle acceleration (a_F) above the threshold value, the speed difference (Δv_F_T) at which the force flux is restored assumes a value near to zero.

3. Method according to Claim 2, **characterized in that** in the case of a negative vehicle acceleration (a_F) below the threshold value, the speed difference (Δv_F_T) at which the force flux is restored corresponds depending on the value approximately to a speed difference (Δv_B_T) between an upper limiting speed (v_B), which is defined by means of the cruise control device, and the lower limiting speed (v_T).

4. Method according to one of Claims 1 to 3, **characterized in that** the speed difference (Δv_F_T) at which the force flux is restored is selected as a function of the current inclination (α_Fb) of the roadway.

5. Method according to one of Claims 1 to 4, **characterized in that** the speed difference (Δv_F_T) at which the force flux is restored is selected as a function of the current driving resistance (F_W).

6. Method according to one of Claims 1 to 5, **characterized in that** the force flux is restored at a vehicle speed (v_F) above the lower limiting speed (v_T).

7. Method according to one of Claims 1 to 5, **characterized in that** the force flux is restored at a vehicle speed (v_F) below the lower limiting speed (v_T).

8. Method according to one of Claims 1 to 7, **characterized in that** the force flux is restored by means of a transmission controller by engaging in gear speed after a preceding neutral shifting operation and/or by closing a clutch device after a preceding disconnection of the drive engine from the drive train.

9. Method according to one of Claims 1 to 8, **characterized in that** the neutral shifting operation which precedes the restoration of the force flux and/or the separation of the engine from the drive train has taken place on the basis of a driving situation in which a route topography of a negative gradient (2) changes into a plane (4) or a positive gradient.

## Revendications

1. Procédé de commande d'une fonction de roulement ou de roue libre d'un véhicule, par exemple d'un véhicule utilitaire (1), comportant une chaîne cinématique ayant un moteur d'entraînement, une boîte de vitesse automatique pouvant être commandée par une commande de boîte ou automatisée, comportant des moyens de changement de vitesse pouvant être commandés pour interrompre la liaison à force dans la chaîne cinématique et comportant un dispositif de régulation de vitesse de déplacement, au moyen duquel la liaison à force dans la chaîne cinématique est interrompue dans une situation de conduite adaptée, dans lequel la liaison à force dans la chaîne cinématique est rétablie en fonction d'une différence de vitesse sélectionnable (Δv_F_T) entre la vitesse de véhicule réelle (v_F) et une vitesse limite inférieure (v_T) fixée au moyen du dispositif de régulation de vitesse de déplacement, **caractérisé en ce que** la différence de vitesse (Δv_F_T) pour laquelle le rétablissement de la liaison à force est effectuée est sélectionnée en fonction de l'accélération de véhicule réelle (a F) de manière à ce que, pour une accélération de véhicule négative (a_F) supérieure à une valeur de seuil, le rétablissement de la liaison à force s'effectue avant une demande de couple de rotation du régulateur de vitesse, ou, pour une accélération de véhicule négative (a_F) inférieure à une valeur de seuil, qu'une demande de couple de rotation soit temporairement bloquée par la commande de boîte de vitesse et que le rétablissement de la liaison à force ne soit effectué qu'en dessous de la vitesse (v_T) du régulateur de vitesse.

2. Procédé selon la revendication 1, **caractérisé en ce que**, pour une accélération de véhicule négative (a_F) supérieure à la valeur de seuil, la différence de vitesse (Δv_F_T) pour laquelle le rétablissement de la liaison à force est effectué passe à une valeur pratiquement nulle.

3. Procédé selon la revendication 2, **caractérisé en ce que**, pour une accélération de véhicule négative (a_F) inférieure à la valeur de seuil, la différence de vitesse (Δv_F_T) pour laquelle le rétablissement de la liaison à force est effectué, correspond approximativement à une différence de vitesse (Δv_B_T) entre une vitesse limite supérieure (v_B) fixée au moyen du dispositif de régulation de vitesse de déplacement et la vitesse limite inférieure (v_T).

4. Procédé selon l'une quelconque des revendications 1 à 3, **caractérisé en ce que** la différence de vitesse (Δv_F_T) pour laquelle le rétablissement de la liaison à force est effectué est sélectionnée en fonction de la pente réelle de la route (α_Fb).

5. Procédé selon l'une quelconque des revendications 1 à 4, **caractérisé en ce que** la différence de vitesse (Δv_F_T) pour laquelle le rétablissement de la liaison à force est effectué est sélectionné en fonction de la résistance à l'avancement (F_W).

6. Procédé selon l'une quelconque des revendications 1 à 5, **caractérisé en ce que** le rétablissement de la liaison à force est effectué pour une vitesse de véhicule (v_F) supérieure à la vitesse limite inférieure (v_T).

7. Procédé selon l'une quelconque des revendications 1 à 5, **caractérisé en ce que** le rétablissement de la liaison à force est effectué pour une vitesse de véhicule (v_F) inférieure à la vitesse limite inférieure (v_T).

8. Procédé selon l'une quelconque des revendications 1 à 7, **caractérisé en ce que** le rétablissement de la liaison à force est effectué par l'intermédiaire d'une commande de boîte de vitesse en engageant une vitesse après un passage au point mort précédent et/ou en fermant un dispositif de couplage après un débrayage précédent du moteur d'entraînement par rapport à la chaîne cinématique.

9. Procédé selon l'une quelconque des revendications 1 à 8, **caractérisé en ce que** le passage au point mort précédant le rétablissement de la liaison à force et/ou le débrayage du moteur d'entraînement par rapport à la chaîne cinématique est effectué en fonction d'une situation de conduite dans laquelle une topographie de la route passe d'une descente (2) à un plan (4) ou à une montée.
